# FASCICULE DE BREVET EUROPEEN

(11) **EP 4 351 926 B1**
(45) Date de publication et mention de la délivrance du brevet: **08.04.2026**
(21) Numéro de dépôt: 22734666.5
(22) Date de dépôt: 10.06.2022
(51) Int. Cl.: B60R 7/04, B60Q 7/00, B60R 13/02

(54) **VÉHICULE AUTOMOBILE COMPRENANT UN OUVRANT AVEC UNE CAVITÉ DE RANGEMENT POUR UN ARTICLE D'ÉQUIPEMENT**
KRAFTFAHRZEUG MIT EINER ÖFFNUNGSPLATTE MIT EINEM STAURAUM FÜR EINEN AUSRÜSTUNGSARTIKEL
MOTOR VEHICLE COMPRISING AN OPENING PANEL WITH A STOWAGE CAVITY FOR AN EQUIPMENT ARTICLE

(30) Priorité: 10.06.2021 FR 2106148
(43) Date de publication de la demande: 17.04.2024
(73) Titulaire: Stellantis Auto SAS, 78300 Poissy (FR); CEIIA - Centro de Engenharia e Desenvolvimento (Associação), 4450-017 Matosinhos (PT); Simoldes Plásticos, SA, Oliveira de Azeméis, 3721-902 Santiago de Riba-UL (PT)
(72) Inventeur: DUTOT, Christophe, 78140 VELIZY VILLACOUBLAY (FR); DUVIVIER, Arnaud, 91190 GIF SUR YVETTE (FR); BERGER, Markus, 65795 Hattersheim (DE); HAUVILLE, Christophe, 78400 CHATOU (FR); RICHEUX GUILLOUX, Nathalie, 91430 IGNY (FR); KERVAREC, Florian, 91310 LONGPONT SUR ORGE (FR); ROBIN, Julien, 44800 SAINT-HERBLAIN (FR); MAGALHÃES, Jean, 4520-145 Santa Maria da Feira (PT); SILVA, Jose, 4450-191 Matosinhos (PT); AGUIAR, João, 4150-075 PORTO (PT); CANOSSA, Joana, 4760-153 Vila Nova de Famalicão (PT); BURMESTER, Gustavo, 4150-341 PORTO (PT)
(74) Mandataire: BCIP
(86) Numéro de dépôt international: PCT/FR2022/051108
(87) Numéro de publication internationale: WO 2022/258933

(56) Documents cités:
- EP-A1- 2 511 136
- DE-A1- 10 303 345
- DE-A1- 102005 029 408
- DE-A1- 102005 059 726
- DE-A1- 102012 020 639
- FR-A1- 2 871 423
- US-A1- 2002 017 230

## Description

La présente invention concerne le domaine des véhicules automobiles. L'invention concerne plus particulièrement un véhicule automobile comprenant une cavité de rangement pour un article d'équipement.

Les véhicules automobiles comportent des articles d'équipement qui sont obligatoires, comme par exemple des outils ou encore un ou plusieurs triangles de pré-signalisation et/ou gilets de sécurité.

Ces articles sont parfois conservés à l'intérieur du véhicule sans avoir un emplacement de rangement dédié. Par exemple, ils sont alors déposés dans le coffre lorsque le véhicule dispose d'un coffre ou encore dans la boite à gants.

Ces articles d'équipement étant obligatoires ils ne peuvent pas être retirés du véhicule pour gagner de l'espace de rangement et peuvent être gênants. Ils peuvent aussi être perdus ou leur emplacement de rangement être oublié. Les articles d'équipement ne sont alors pas disponibles en situation d'urgence.

Dans certains véhicules, un emplacement de rangement pour les articles d'équipement est prévu dans le coffre du véhicule. Il s'agit alors d'un bac de rangement qui peut être par exemple disposé au niveau d'un bord du coffre, derrière un passage de roue. Des véhicules comprennent aussi une trappe dans le coffre qui donne accès à un bac de rangement.

Ces solutions ne sont cependant pas adaptées aux véhicules automobiles de type utilitaire ou professionnel comme par exemple les camionnettes, les fourgons, ou les véhicules frigorifiques. En effet, ces véhicules n'ont pas de coffre et sont généralement chargés avec du matériel lourd qui ne peut pas être facilement déchargé en cas d'urgence pour accéder à l'article d'équipement.

On connait une solution dans le document US 3933119 qui décrit un véhicule automobile comprenant un triangle de pré-signalisation rangé dans une porte du véhicule. La porte comprend un compartiment agencé en dessous de la poignée d'ouverture dans lequel le triangle est rangé en position pliée. Ainsi lorsque le conducteur ouvre la porte, le triangle est visible par un autre automobiliste arrivant depuis l'arrière. Le triangle de pré-signalisation permet alors d'attirer l'attention des autres automobilistes lorsque la porte est ouverte.

Cette solution n'est pas satisfaisante car le compartiment comprenant le triangle de pré-signalisation occupe une place dans la porte qui comprend généralement un bac de rangement pour des bouteilles ou des petits objets. L'espace de rangement disponible est alors réduit par la présence du triangle de pré-signalisation. Le document DE 10 2012 020639 A1 décrit un véhicule automobile selon le préambule de la revendication 1.

L'invention a pour objectif d'améliorer les solutions connues de l'état de la technique, en proposant une solution permettant de ranger un article d'équipement dans un véhicule automobile qui soit adaptée aux véhicules qui ne comprennent pas de coffre, et qui ne réduise ou n'occupe pas les espaces de stockages existants.

A cet effet et selon un premier aspect, l'invention a pour objet un véhicule automobile comprenant au moins un ouvrant avec une tranche au niveau de laquelle est agencée un système de verrouillage dudit ouvrant ; l'ouvrant comprenant en outre une garniture intérieure montrant un pourtour comprenant au moins une surface transversale au niveau de la tranche de l'ouvrant, formant une joue. Le véhicule est remarquable en ce que la joue comprend au moins une ouverture verticale oblongue donnant sur une cavité de rangement pour un article d'équipement.L'ouverture comprend une portion principale ayant une largeur donnée, et au moins une portion secondaire montrant une largeur réduite par rapport à la portion principale, formant une patte de retenue.

Cette solution propose un véhicule comprenant un emplacement dédié pour un article d'équipement, qui n'est pas disposé dans le coffre d'un véhicule. La solution est donc adaptable aux véhicules ne comportant pas de coffre ou dont l'utilisation demande une occupation optimale de l'espace du coffre. L'utilisateur sait donc toujours où trouver l'article d'équipement en cas d'urgence. La cavité de rangement pour un article d'équipement est disposée dans la tranche d'un ouvrant ce qui permet de ne pas occuper un espace qui est généralement utilisé comme vide poche ou comme espace de stockage, comme par exemple dans la face intérieure d'une porte. De plus, l'article d'équipement est facilement accessible en cas d'urgence. L'utilisateur doit simplement ouvrir l'ouvrant avant d'extraire l'article. Il s'agit d'une solution simple qui ne demande pas l'ajout de pièces à coût élevé, ni un procédé complexe de fabrication. La patte de retenue permet de fournir un dispositif simple permettant d'empêcher l'article d'équipement de sortir de la cavité de manière non désirée.

Dans des modes de réalisation, l'ouvrant comprend en outre une pièce d'aspect qui encadre l'ouverture et qui est fixée sur la joue de la garniture intérieure ; et la pièce d'aspect comprend une patte de retenue s'étendant sur une partie de l'ouverture. De préférence, la pièce d'aspect est fixée sur la joue par clippage. La pièce d'aspect, en plus d'améliorer l'aspect visuel de la joue de l'ouvrant permet aussi de rigidifier l'ouverture dans la joue. La pièce d'aspect comprend la patte de retenue, et peut aussi porter d'autres fonctions comme un bouton de commande d'extraction lié à un mécanisme d'extraction de l'article d'équipement.

De préférence, la patte de retenue comprenant une face extérieure et une face intérieure orientée vers la cavité de rangement, le véhicule est remarquable en ce que la face intérieure de la patte de retenue est au moins partiellement recouverte par une mousse en un matériau élastomère. Ce revêtement permet de limiter la génération de bruits pouvant être causés par les vibrations de l'article d'équipement dans la cavité.

De préférence, l'ouverture de la joue comprenant un pourtour avec au moins un bord supérieur, un bord inférieur et deux bords latéraux, le véhicule est remarquable en ce que la patte de retenue est disposée au niveau du bord inférieur ou du bord supérieur de l'ouverture, et en ce que la cavité et l'ouverture sont dimensionnées de manière à autoriser une translation verticale dudit article d'équipement dans la cavité, entre une position verrouillée derrière la patte de retenue et une position d'extraction dégagée de la patte de retenue. Cette configuration permet le maintien de l'article d'équipement dans la cavité de manière simple. Par exemple, l'article d'équipement peut être déposé par gravité en position de retenue, et être extrait par translation vers le haut.

Dans des modes de réalisation, le bord inférieur ou le bord supérieur de l'ouverture comprend au moins une encoche dimensionnée pour le passage d'au moins un doigt d'un utilisateur de manière à pouvoir déplacer un article d'équipement en translation verticale dans la cavité.

De préférence, la pièce d'aspect comprend au moins une paroi traversant l'ouverture qui forme au moins une paroi de la cavité de rangement. Avantageusement, la pièce d'aspect comprend au moins une paroi traversant l'ouverture qui forme le fond de la cavité. De préférence la cavité est formée par une seule pièce et portée par la pièce d'aspect.

Dans des modes de réalisation, la cavité de rangement comprenant au moins une paroi supérieure, une paroi inférieure, et deux parois latérales, le véhicule est remarquable en ce que l'ouvrant comprend au moins un dispositif de maintien d'un article d'équipement dans la cavité qui comprend au moins un ressort de compression agencé au niveau de la paroi supérieure ou de la paroi inférieure de la cavité ; de préférence, le dispositif de maintien comprend en outre une pièce de guidage en compression du ressort.

Le dispositif de maintien permet d'éviter que l'article d'équipement ne s'échappe quand l'ouvrant est ouvert, et réduit les mouvements de l'ouvrant causés par les vibrations dans la cavité.

Dans des modes de réalisation, la cavité de rangement comprenant au moins une paroi supérieure, une paroi inférieure, et deux parois latérales, le véhicule est remarquable en ce que l'ouvrant comprend en outre un dispositif d'extraction d'un article d'équipement de la cavité, le dispositif d'extraction comprenant une pièce biseautée agencée dans la cavité au niveau de la paroi supérieure ou de la paroi inférieure, la pièce biseautée étant actionnable au moyen d'un bouton poussoir faisant saillie de la joue. Le dispositif d'extraction permet de faciliter l'extraction de l'article d'équipement de la cavité en cas d'urgence.

Dans des modes de réalisation, l'ouvrant comprend un clapet agencé au niveau de l'ouverture de la joue, le clapet étant mobile entre une position fermée dans laquelle il recouvre entièrement l'ouverture, et au moins une position ouverte dans laquelle le clapet est écarté de l'ouverture. Le clapet permet d'améliorer l'aspect de l'ouvrant en masquant l'article d'équipement, et peut assurer les fonctions de retenue et/ou d'extraction de l'article.

L'invention sera bien comprise et d'autres aspects et avantages apparaîtront clairement à la lecture de la description qui suit, donnée à titre d'exemple en référence aux planches de dessins annexées sur lesquelles :
[Fig. 1] la figure 1 est une vue en perspective d'un ouvrant d'un véhicule selon un mode de réalisation de l'invention, montrant un article d'équipement en position de verrouillage ;
[Fig. 2] la figure 2 est une vue en perspective de la figure 1, montrant l'article d'équipement en position d'extraction ;
[Fig. 3] la figure 3 est une vue en perspective montrant le détail d'un ouvrant d'un véhicule selon un autre mode de réalisation de l'invention ;
[Fig. 4] la figure 4 est une vue en perspective d'un ouvrant d'un véhicule qui n'est pas conforme à l'invention, montrant un clapet en position fermée ;
[Fig. 5] la figure 5 est une vue de la figure 4, montrant le clapet en position ouverte ;
[Fig. 6] la figure 6 est une vue schématique de face d'un détail d'un ouvrant d'un véhicule selon encore un autre mode de réalisation de l'invention, montrant l'ouverture et la cavité pour un article d'équipement.

Dans la suite de la description, le terme « comprendre » est synonyme de « inclure » et n'est pas limitatif en ce qu'il autorise la présence d'autres éléments dans le véhicule auquel il fait référence. Il est entendu que le terme « comprendre » inclut les termes « consister en ».

De même, les termes « inférieur », « supérieur », « haut » et « bas » s'entendront selon leur définition usuelle, dans laquelle les termes « inférieur » et « bas » indiquent une proximité avec le sol plus importante selon la direction verticale que respectivement les termes « supérieur » et « haut ».

Les termes « longitudinal », transversal », « avant » et « arrière » s'entendront par rapport à l'orientation générale du véhicule tel que pris selon son sens normal de marche.

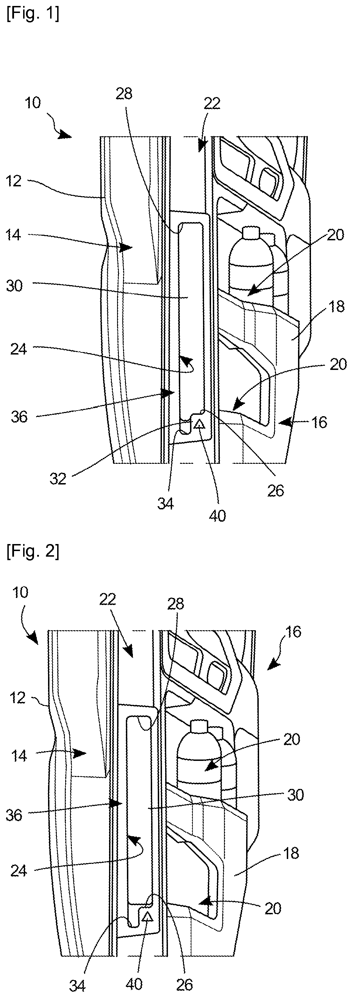

Un véhicule selon un mode de réalisation de l'invention comprend au moins un ouvrant 10 comme montré aux figures 1 à 5. L'ouvrant peut être une porte avant ou arrière du véhicule, une porte battante de coffre, une porte coulissante. De préférence, au moins un ouvrant 10 est une porte avant côté conducteur et/ou du côté passager

Un seul ouvrant va être décrit dans la description qui suit. L'homme du métier comprendra que le véhicule peut comprendre deux ou plus de deux ouvrants comportant les caractéristiques de l'ouvrant qui est décrit ici.

L'ouvrant 10 comprend une surface intérieure orientée vers l'habitacle, une surface extérieure formant la carrosserie 12 du véhicule, et des tranches. L'ouvrant comprend une tranche 14 au niveau de laquelle est agencé un système de verrouillage dudit ouvrant. Le système de verrouillage peut être comprendre serrure.

Dans le cas d'une porte avant d'un véhicule automobile, il s'agit le plus souvent de la tranche verticale orientée vers l'arrière. Cependant, certains véhicules comprennent une porte qui s'ouvre en pivotant vers l'arrière ou une porte montée sur une glissière s'ouvrant vers l'arrière du véhicule. La tranche au niveau de laquelle est agencée le système de verrouillage peut alors être orientée dans une autre direction. L'homme du métier comprendra qu'il s'agit de la tranche de l'ouvrant qui est libre et visible par un utilisateur lorsque l'ouvrant est en position ouverte.

L'ouvrant 10 comprend en outre une garniture 16 intérieure fixée à la structure de l'ouvrant. La garniture 16 comprend une ou plusieurs pièces formant une face latérale 18 s'étendant dans un plan sensiblement vertical longitudinal, lorsque la porte est en position fermée. La face latérale 18 peut comprendre des espaces de rangement 20 pour des petits objets comme par exemple pour des bouteilles comme montré aux figures 1 et 2. La face latérale 18 peut comprendre aussi un système d'ouverture de la porte comme par exemple une poignée d'ouverture ou encore un système d'ouverture de la vitre avant.

La garniture 16 comprend en outre un pourtour avec des surfaces transversales qui assurent la jonction entre la face latérale 18 et la carrosserie 12 du véhicule. Le pourtour comprend au moins une surface transversale au niveau de la tranche 14 de l'ouvrant, formant une joue 22 verticale.

La joue 22 comprend au moins une ouverture 24 verticale oblongue donnant sur une cavité de rangement pour un article d'équipement. L'ouverture 24 de la joue 22 est définie par un pourtour avec au moins un bord inférieur 26, un bord supérieur 28 et deux bords latéraux. La forme et les dimensions de l'ouverture peuvent varier, de préférence l'ouverture est une ouverture rectangulaire qui s'étend sur une longueur supérieure à 10 cm, de préférence supérieure à 20 cm.

Un article d'équipement peut être n'importe quel équipement pour le véhicule comme par exemple un outil, un triangle de pré-signalisation ou un gilet de sécurité. L'article d'équipement 30 montré aux figures 1 à 6, est un boitier comprenant un triangle de pré-signalisation.

L'article d'équipement 30 est disposé de façon amovible dans la cavité de rangement qui se trouve au niveau de la joue 22. Il est donc facilement accessible lorsque la porte est ouverte.

Pour éviter la sortie non désirée de l'article d'équipement de la cavité, l'ouvrant 10 comprend en outre une patte de retenue 32 s'étendant sur au moins une partie de l'ouverture 24, ou découpée dans la garniture. L'ouverture a alors une forme spécifique avec une portion principale ayant une largeur donnée, et au moins une portion secondaire montrant une largeur réduite par rapport à la portion principale, formant la patte de retenue 32.

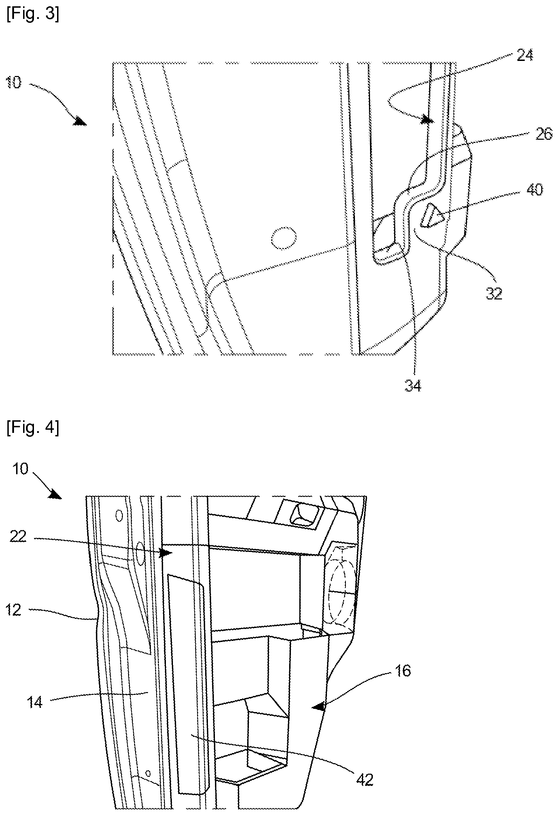

Ainsi, la patte de retenue 32 peut être une pièce rapportée au niveau de l'ouverture ou être venue de matière de la garniture. Lorsqu'elle est venue de matière de la garniture, la patte de retenue est formée par une excroissance depuis un bord de l'ouverture 24 vers l'intérieure de celle-ci, comme montré à la figure 3. Du fait de cette excroissance, l'ouverture a une portion de largeur réduite.

La patte de retenue 32 peut avoir n'importe quelle forme, de préférence il s'agit d'une patte rectangulaire qui s'étend depuis au moins un des bords de l'ouverture. De préférence, la patte de retenue 32 est disposée au niveau du bord inférieur 28 ou du bord supérieur 26 de l'ouverture.

L'ouverture 24 peut être dimensionnée de manière à autoriser une translation verticale de l'article d'équipement 30 dans la cavité, entre une position verrouillée derrière la patte de retenue 32 comme montré à la figure 1, et une position d'extraction dégagé de la patte de retenue 32 comme montré à la figure 2.

Le bord inférieur 28 ou le bord supérieur 26 de l'ouverture peut comprendre au moins une encoche 34 dimensionnée pour le passage d'au moins un doigt d'un utilisateur. L'utilisateur peut alors pousser manuellement l'article d'équipement de manière à le déplacer en translation verticale dans la cavité.

Dans des modes de réalisation montrés aux figures 1 et 2, l'ouvrant 10 comprend en outre une pièce d'aspect 36 qui encadre l'ouverture 24 et qui est fixée à la joue 22 de la garniture. La pièce d'aspect est de préférence superposée à l'ouverture 24 et recouvre au moins partiellement les bords de l'ouverture.

De préférence, la pièce d'aspect 36 comprend la patte de retenue 32. La pièce d'aspect peut être réalisée dans un matériau plastique plus rigide que la garniture intérieure.

La pièce d'aspect peut être fixée à la joue par tout moyen approprié, comme par exemple par des vis, ou des moyens de fixation par déformation élastique, de type clips.

La pièce d'aspect 36 peut comprendre au moins une paroi (non représentée) disposée dans l'ouverture qui forme au moins une paroi de la cavité de rangement. De préférence, la pièce d'aspect forme toutes les parois y compris le fond de la cavité. En variante, la pièce d'aspect forme une ou plusieurs parois, inférieures, supérieures, et latérales de la cavité, mais ne forme pas le fond de cette dernière.

Les parois de la cavité la cavité de rangement comprennent au moins une paroi supérieure au niveau du bord supérieur de l'ouverture, une paroi inférieure au niveau du bord inférieur de l'ouverture et deux parois latérales. De manière à limiter la génération de bruits pouvant être causés par des vibrations de l'article d'équipement dans la cavité, au moins une paroi de la cavité est au moins partiellement recouverte par un matériau absorbant les vibrations, comme par exemple par une mousse en élastomère, par exemple une mousse en éthylène-propylène-diène monomère (EPDM).

La patte de retenue 32 comprend une face extérieure et une face intérieure, non montrée orientée vers la cavité de rangement. De manière à limiter la génération de bruits en provenance de vibrations de l'article d'équipement dans la cavité, la face intérieure de la patte de retenue peut être au moins partiellement recouverte par un matériau absorbant les vibrations, comme par exemple en EPDM.

L'ouvrant 10 peut comprendre au moins un dispositif de maintien d'un article d'équipement dans la cavité. Le dispositif de maintien peut être par exemple un dispositif de maintien par serrage de l'article d'équipement, ou par encastrement.

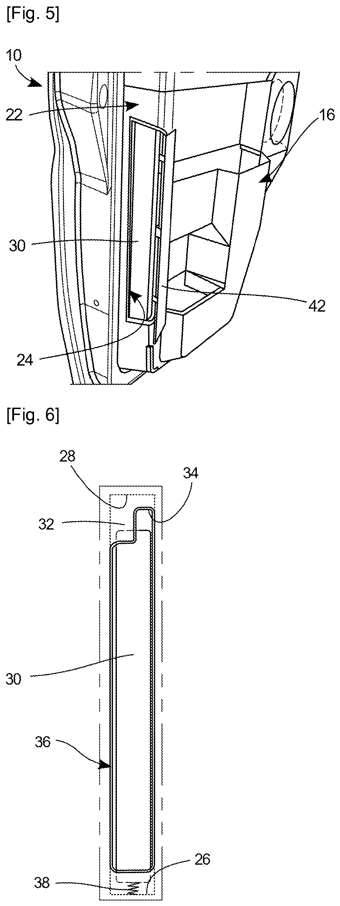

Le dispositif de maintien peut comprendre au moins un ressort 38 de compression, montré à la figure 6, agencé au niveau de la paroi supérieure ou de la paroi inférieure de la cavité. Le ressort 38 peut être libre ou fixé à une paroi de la cavité.

Comme montré à la figure 6, le ressort peut être agencé au niveau de la paroi de la cavité qui se trouve verticalement à l'opposé d'une encoche 34 dans l'ouverture, comme par exemple un ressort agencé au niveau de la paroi inférieure de la cavité et une encoche agencée au niveau du bord supérieur 26 de l'ouverture.

Le dispositif de maintien peut comprendre en outre une pièce de guidage en compression du ressort, non montrée. La pièce de guidage en compression peut être par exemple un téton ou un cylindre de guidage. La pièce de guidage peut aussi comprendre une base en appui contre l'article d'équipement et mobile entre deux butées formées dans les parois de la cavité.

Dans des modes de réalisation, l'ouvrant comprend en outre un dispositif d'extraction non montré de l'article d'équipement de la cavité. Le dispositif d'extraction peut être un dispositif d'extraction mécanique manuel ou motorisé. Un dispositif d'extraction motorisé peut être commandé par une interface de commande au niveau de la joue de la porte ou au niveau ailleurs dans le véhicule.

De manière à être indépendant d'une panne électrique du véhicule, le dispositif d'extraction est de préférence manuel. Le dispositif d'extraction peut comprendre un mécanisme permettant de déplacer en translation l'article d'équipement entre une position verrouillée derrière la patte de retenue, et une position d'extraction dégagé de la patte de retenue. Le dispositif d'extraction peut aussi comprendre un mécanisme permettant de libérer le dispositif de maintien de l'article d'équipement, comme par exemple un mécanisme permettant d'entrainer le ressort 38 en compression.

Par exemple, le mécanisme d'extraction peut comprendre une pièce biseautée, non montrée agencée dans la cavité au niveau de la paroi supérieure ou de la paroi inférieure. La pièce biseautée est actionnable en translation de manière à pousser l'article d'équipement en translation verticale dans la cavité.

Par exemple, la pièce biseautée peut être actionnable au moyen d'un bouton 40, montré aux figures 1 à 3, de préférence un bouton poussoir, faisant saillie de la joue 22 de l'ouvrant 10. De préférence, le bouton 40 fait saillie de la pièce d'aspect 36.

Dans des modes de réalisation montrés aux figures 4 et 5, l'ouvrant 10 comprend un clapet 42 agencé au niveau de l'ouverture de la joue. Le clapet est mobile entre une position fermée dans laquelle il recouvre entièrement l'ouverture 24, et au moins une position ouverte dans laquelle le clapet est à l'écart de l'ouverture 24. Dans la position ouverte, le clapet 42 dégage suffisamment l'ouverture 24 pour permettre à un utilisateur d'extraire l'article d'équipement.

## Revendications

1. Véhicule automobile comprenant au moins un ouvrant (10) avec une tranche (14) au niveau de laquelle est agencée un système de verrouillage dudit ouvrant ; l'ouvrant comprenant en outre une garniture (16) intérieure montrant un pourtour comprenant au moins une surface transversale au niveau de la tranche (14) de l'ouvrant (10), formant une joue (22) ; le véhicule comprenant au moins une ouverture (24) verticale oblongue donnant sur une cavité de rangement pour un article d'équipement (30), **caractérisé en ce que** l'ouverture comprend une portion principale ayant une largeur donnée, et au moins une portion secondaire montrant une largeur réduite par rapport à la portion principale, formant une patte de retenue (32).

2. Véhicule selon la revendication 1, **caractérisé en ce que** l'ouvrant (10) comprend en outre une pièce d'aspect (36) qui encadre l'ouverture (24) et qui est fixée sur la joue (22) de la garniture intérieure ; et **en ce que** la pièce d'aspect (36) comprend une patte de retenue (32) s'étendant sur une partie de l'ouverture (24) ; de préférence, la pièce d'aspect (36) est fixée sur la joue par clippage.

3. Véhicule selon la revendication2, **caractérisé en ce que** la pièce d'aspect (36) comprend au moins une paroi traversant l'ouverture (24) qui forme au moins une paroi de la cavité de rangement.

4. Véhicule selon l'une quelconque des revendications précédentes, la patte de retenue (32) comprenant une face extérieure et une face intérieure orientée vers la cavité de rangement, le véhicule est **caractérisé en ce que** la face intérieure de la patte de retenue (32) est au moins partiellement recouverte par une mousse en un matériau élastomère.

5. Véhicule selon l'une quelconque des revendications précédentes, l'ouverture (24) de la joue comprenant un pourtour avec au moins un bord inférieur (26), un bord supérieur (28) et deux bords latéraux, le véhicule est **caractérisé en ce que** la patte de retenue (32) est disposée au niveau du bord inférieur (26) ou du bord supérieur (28) de l'ouverture, et **en ce que** la cavité et l'ouverture (24) sont dimensionnées de manière à autoriser une translation verticale dudit article d'équipement dans la cavité, entre une position verrouillée derrière la patte de retenue (32) et une position d'extraction dégagée de la patte de retenue (32).

6. Véhicule selon l'une quelconque des revendications précédentes, l'ouverture (24) de la joue comprenant un pourtour avec au moins un bord supérieur, un bord inférieur et deux bords latéraux, le véhicule est **caractérisé en ce que** le bord inférieur ou le bord supérieur de l'ouverture (24) comprend au moins une encoche (34) dimensionnée pour le passage d'au moins un doigt d'un utilisateur, de manière à déplacer un article d'équipement en translation verticale dans la cavité.

7. Véhicule selon l'une quelconque des revendications précédentes, la cavité de rangement comprenant au moins une paroi supérieure, une paroi inférieure, et deux parois latérales, le véhicule est **caractérisé en ce que** l'ouvrant (10) comprend au moins un dispositif de maintien d'un article d'équipement dans la cavité qui comprend au moins un ressort (38) de compression agencé au niveau de la paroi supérieure ou de la paroi inférieure de la cavité ; de préférence, le dispositif de maintien comprend en outre une pièce de guidage en compression du ressort.

8. Véhicule selon l'une quelconque des revendications précédentes, la cavité de rangement comprenant au moins une paroi supérieure, une paroi inférieure, et deux parois latérales, le véhicule est **caractérisé en ce que** l'ouvrant comprend en outre un dispositif d'extraction d'un article d'équipement de la cavité, le dispositif d'extraction comprenant une pièce biseautée agencée dans la cavité au niveau de la paroi supérieure ou de la paroi inférieure, la pièce biseautée étant actionnable au moyen d'un bouton (40) poussoir faisant saillie de la joue.

9. Véhicule selon l'une quelconque des revendications précédentes, **caractérisé en ce que** l'ouvrant (10) comprend un clapet (42) agencé au niveau de l'ouverture (24) de la joue, le clapet étant mobile entre une position fermée dans laquelle il recouvre entièrement l'ouverture (24), et au moins une position ouverte dans laquelle le clapet est écarté de l'ouverture (24)

## Patentansprüche

1. Kraftfahrzeug mit mindestens einem Türflügel (10) mit einer Wange (14), an der ein Verriegelungssystem des Türflügels angeordnet ist; wobei der Türflügel ferner einen Innenbelag (16) mit einem Umfang aufweist, der mindestens eine Querfläche an der Wange (14) des Türflügels (10) aufweist, die eine Wange (22) bildet; wobei die Wange (22) mindestens eine vertikale längliche Öffnung (24) aufweist, die zu einem Aufbewahrungshohlraum für einen Ausrüstungsgegenstand (30) führt, **dadurch gekennzeichnet, dass** die Öffnung (24) einen Hauptabschnitt mit einer bestimmten Breite und mindestens einen Nebenabschnitt mit einer im Vergleich zum Hauptabschnitt verringerten Breite umfasst, der eine Haltelasche bildet.

2. Fahrzeug nach dem vorhergehenden Anspruch, **dadurch gekennzeichnet, dass** die Öffnung (10) ferner ein Sichtstück (36) umfasst, das die Öffnung (24) umgibt und an der Wange (22) der Innenauskleidung befestigt ist; und dass das Sichtstück (36) eine Haltelasche (32) umfasst, die sich über einen Teil der Öffnung (24) erstreckt; wobei vorzugsweise das Sichtstück (36) an der Wange durch Klemmen befestigt ist.

3. Fahrzeug nach Anspruch 2, **dadurch gekennzeichnet, dass** das Sichtstück (36) mindestens eine durch die Öffnung (24) hindurchgehende Wand umfasst, die mindestens eine Wand des Aufbewahrungshohlraums bildet.

4. Fahrzeug nach einem der Ansprüche 1 bis 3, wobei die Haltelasche (32) eine Außenfläche und eine Innenfläche aufweist, die dem Aufbewahrungshohlraum zugewandt ist, wobei das Fahrzeug **dadurch gekennzeichnet ist, dass** die Innenfläche der Haltelasche (32) zumindest teilweise mit einem Schaum aus einem elastomeren Material bedeckt ist.

5. Fahrzeug nach einem der Ansprüche 1 bis 4, wobei die Wangenöffnung (24) einen Umfang mit mindestens einer unteren Kante (26), einer oberen Kante (28) und zwei Seitenkanten aufweist, **dadurch gekennzeichnet, dass** die Haltelasche (32) an der unteren Kante (26) oder der oberen Kante (28) der Öffnung angeordnet ist, und dass der Hohlraum und die Öffnung (24) so bemessen sind, dass eine vertikale Verschiebung des Ausrüstungsgegenstands in den Hohlraum zwischen einer verriegelten Position hinter dem Hohlraum möglich ist Halterungslasche (32) und eine von der Halterungslasche (32) freigezogene Stellung.

6. Fahrzeug nach einem der Ansprüche 1 bis 5, wobei die Wangenöffnung (24) einen Umfang mit mindestens einer oberen Kante, einer unteren Kante und zwei Seitenkanten aufweist, wobei das Fahrzeug **dadurch gekennzeichnet ist, dass** die untere Kante oder die obere Kante der Öffnung (24) mindestens eine Kerbe (34) aufweist, die so dimensioniert ist, dass sie mindestens einen Finger eines Benutzers durchlässt, um einen Ausrüstungsgegenstand in vertikaler Translation in den Hohlraum zu bewegen.

7. Fahrzeug nach einem der Ansprüche 1 bis 6, wobei der Aufbewahrungshohlraum mindestens eine obere Wand, eine untere Wand und zwei Seitenwände umfasst, wobei das Fahrzeug **dadurch gekennzeichnet ist, dass** die Öffnung (10) mindestens eine Vorrichtung zum Halten eines Ausrüstungsgegenstandes in dem Hohlraum umfasst, die mindestens eine Druckfeder (38) umfasst, die an der oberen Wand oder der unteren Wand des Hohlraums angeordnet ist; wobei die Haltevorrichtung vorzugsweise weiterhin ein Federdruckführungselement umfasst.

8. Fahrzeug nach einem der Ansprüche 1 bis 7, wobei der Aufbewahrungshohlraum mindestens eine obere Wand, eine untere Wand und zwei Seitenwände umfasst, wobei das Fahrzeug **dadurch gekennzeichnet ist, dass** die Öffnungseinrichtung ferner eine Vorrichtung zum Herausziehen eines Ausrüstungsgegenstands aus dem Hohlraum umfasst, wobei die Herausziehvorrichtung ein abgeschrägtes Teil umfasst, das in dem Hohlraum an der oberen Wand oder der unteren Wand angeordnet ist, wobei das abgeschrägte Teil mittels eines Druckknopfes (40) betätigbar ist, der von der Wange vorsteht.

9. Fahrzeug nach einem der Ansprüche 1 bis 8, **dadurch gekennzeichnet, dass** die Öffnung (10) eine Klappe (42) umfasst, die an der Öffnung (24) der Wange angeordnet ist, wobei die Klappe zwischen einer geschlossenen Position, in der sie die Öffnung (24) vollständig bedeckt, und mindestens einer offenen Position, in der die Klappe von der Öffnung (24) entfernt ist, beweglich ist.

## Claims

1. Motor vehicle comprising at least one door (10) with a slice (14) at the level of which is arranged a system for locking said door; the door further comprising an inner lining (16) showing a perimeter comprising at least one surface transverse to the level of the slice (14) of the door (10), forming a cheek (22); the cheek (22) comprising at least one oblong vertical opening (24) giving onto a stowage cavity for an equipment item (30), wherein the opening (24) comprises a main portion having a given width, and at least one secondary portion showing a reduced width by report to the main portion, forming a retained lug.

2. Vehicle according to the previous claim, wherein the door (10) further comprises an aspect piece (36) which frames the opening (24) and which is fixed to the cheek (22) of the inner lining; and wherein the aspect piece (36) comprises a retained lug (32) extending over a part of the opening (24); preferably, the aspect piece (36) is fixed to the cheek by clipping.

3. Vehicle according to Claim 2, **characterised in that** the aspect piece (36) comprises at least one wall passing through the opening (24) which forms at least one wall of the stowage cavity.

4. Vehicle according to any one of Claims 1 to 3, the retained lug (32) comprising an outer face and an inner face orientated towards the stowage cavity, the vehicle is **characterised in that** the inner face of the retained lug (32) is at least partially covered by a foam made of an elastomer material.

5. Vehicle according to any one of Claims 1 to 4, the opening (24) of the cheek comprising a perimeter with at least one lower edge (26), an upper edge (28) and two lateral edges, the retained lug (32) is arranged at the level of the lower edge (26) or the upper edge (28) of the opening, and the cavity and the opening (24) are dimensioned so as to permit a vertical translation of said equipment item in the cavity, between a position locked behind the retained lug (32) and an extraction position released from the retained lug (32).

6. Vehicle according to any one of Claims 1 to 5, the opening (24) of the cheek comprising a periphery with at least one upper edge, a lower edge and two lateral edges, the vehicle is **characterised in that** the lower edge or the upper edge of the opening (24) comprises at least one notch (34) dimensioned for the passage of at least one finger of a user, so as to move an equipment item in vertical translation in the cavity.

7. Vehicle according to any one of Claims 1 to 6, the stowage cavity comprising at least one upper wall, a lower wall, and two side walls, wherein the door (10) comprises at least one device for holding an equipment item in the cavity which comprises at least one compression spring (38) arranged at the level of the upper wall or the lower wall of the cavity; preferably, the holding device further comprises a component for guiding the spring in compression.

8. Vehicle according to any one of Claims 1 to 7, the stowage cavity comprising at least one upper wall, a lower wall, and two side walls, the vehicle is **characterised in that** the door further comprises a device for extracting an equipment item from the cavity, the extraction device comprising a bevelled component arranged in the cavity at the level of the upper wall or the lower wall, the bevelled component being actuatable by means of a push button (40) projecting from the cheek.

9. Vehicle according to any one of Claims 1 to 8, **characterised in that** the door (10) comprises a valve (42) arranged at the level of the opening (24) of the cheek, the valve being movable between a closed position in which it completely covers the opening (24), and at least one open position in which the valve is moved away from the opening (24).
